# EUROPÄISCHE PATENTSCHRIFT

(11) **EP 2 113 358 B1**
(45) Veröffentlichungstag und Bekanntmachung des Hinweises auf die Patenterteilung: **16.03.2011**
(21) Anmeldenummer: 09004605.3
(22) Anmeldetag: 30.03.2009
(51) Int. Cl.: B29D 99/00, B29C 45/14

(54) **Leitschaufeln eines Leitschaufelgitters einer Fluggasturbine**
Guide vane of a guide vane grid of an aircraft gas turbine
Aubes directrices d'une grille d'aubes directrices d'une turbine à gas d'avion

(30) Priorität: 30.04.2008 DE 102008021684
(43) Veröffentlichungstag der Anmeldung: 04.11.2009
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)
(74) Vertreter: Weber, Joachim

(56) Entgegenhaltungen:
- EP-A- 1 106 783
- EP-A- 1 450 006
- EP-A- 1 939 403
- WO-A-2005/109984
- DE-A1- 2 444 267
- DE-A1- 4 320 374
- DE-A1- 19 726 911
- JP-A- 9 125 905
- US-A- 2 175 204
- US-A- 4 301 584
- US-A- 4 860 425
- US-B1- 6 196 794
- UWE HESSLER: "Die Bedeutung der Luftfahrtregion III für Rolls-Royce Deutschland" INNOVATIONSFORUM "FLUGTRIEBWERKSTECHNIK IN BRANDENBURG", [Online] 7. Dezember 2004 (2004-12-07), Seiten 1-23, XP002540236 Gefunden im Internet: URL:http://www.tu-cottbus.de/Triebwerkstec hnik/pdf/hessler.pdf> [gefunden am 2009-08-04]

## Beschreibung

Die Erfindung bezieht sich auf ein Verfahren zur Herstellung einer Leitschaufel eines Leitschaufelgitters einer Fanstruktur einer Fluggasturbine sowie auf den Aufbau der Leitschaufel.

Turbofan-Gasturbinentriebwerke weisen einen relativ großen Fanrotor auf, der auch eine Luftströmung um das Kerntriebwerk erzeugt. Stromab des Fanrotors ist ein Leitschaufelgitter angeordnet, um die Luftströmung möglichst drallfrei in Axialrichtung auszurichten.

Die Schaufeln des Leitschaufelgitters müssen dabei zum einen eine ausreichende mechanische Festigkeit aufweisen, zum anderen sind sie Schwingungen ausgesetzt und sollen deshalb ein möglichst gutes Dämpfungsverhalten haben.

Der Stand der Technik zeigt Leitschaufeln, welche als Gussteile ausgebildet sind. Diese weisen den Nachteil auf, dass sie ein relativ hohes Gewicht haben und bei Reparaturen hinsichtlich der Eigenspannungen rissanfällig sind.

Alternativ hierzu zeigt der Stand der Technik Leitschaufeln aus Titanwerkstoffen. Diese weisen ein relativ hohes Gewicht auf und sind sehr kostenintensiv. Weiterhin haben sie eine schlechte Eigendämpfung.

Langfaserverstärkte Schaufeln mit organischer Matrix und metallbeschichteter Vorderkante sind eine weitere Alternative.

Aus der EP 1 106 783 A ist ein Verfahren zum Herstellen einer Schaufel einer Strömungsmaschine bekannt, bei welchem in einem zweistufigen Herstellungsverfahren zunächst eine Hydro-Umformung mittels eines Innenhochdruck-Umformverfahrens erfolgt. Der so gebildete Hohlraum der Schaufel-Hüllstruktur wird nachfolgend mit Kunststoff ausgespritzt. Der Umformdruck wird somit durch das Innenhochdruck-Umformen aufgebracht, um auf diese Weise die metallische Hüllstruktur passgenau und exakt auszubilden. Das Ausspritzen des Hohlraums mit Kunststoff erfolgt dann in dem zweiten Arbeitsschritt ohne jede weitere Umformung der metallischen Hüllstruktur.

Aus der WO 2005/109984 A ist es bekannt, ein Hybridelement mit einer einseitigen metallischen Seite zu erzeugen, wobei diese metallische Seite durch das Einspritzen einer Kunststoffmasse verformt wird. Es ergibt sich somit keine geschlossene Hülle, vielmehr erfolgt lediglich die Ausbildung einer dünnen Schutzwandung zum Schutz des Kunststoffmaterials.

Die US 4 860 425 A zeigt ein Verfahren zur Herstellung eines Komposit-Bauteils, bei welchem vorgesehen ist, eine Kunststoffmasse durch ein Spritzguss-Verfahren zwischen zwei Metallbleche einzubringen, wobei die beiden Metallbleche während des Spritzverfahrens verformt werden. Ein geschlossener Innenraum wird dabei nicht erzeugt, vielmehr dienen die Metallbleche zur Abschirmung der Oberfläche des Kunststoffmaterials.

Der Erfindung liegt die Aufgabe zugrunde, eine Leitschaufel eines Leitschaufelgitters einer Fanstruktur einer Fluggasturbine zu schaffen, welche bei einfachem Aufbau ein geringes Gewicht und eine gute Eigendämpfung aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Schaufel an ihren Außenflächen metallische Bleche umfasst, während der Kern aus einem Kunststoffmaterial besteht.

Hinsichtlich des erfindungsgemäßen Verfahrens werden zwei dünne, im Wesentlichen flache folienartige Bleche aufeinandergelegt und am Umfang verschweißt. Diese bilden somit eine Tasche oder einen Raum, in dem mittels eines Spritzgussverfahrens Kunststoff eingespritzt wird. Durch das Einlegen in eine geeignete Spritzgussform werden somit die Bleche während des Spritzgussvorgangs verformt, so dass sich ein Innenhochdruckumformverfahren ergibt. Durch dieses ist es möglich, die komplexe dreidimensionale Struktur der Schaufeln in einem Arbeitsgang zu erzeugen und gleichzeitig den entstehenden Formhohlraum innerhalb der Bleche vollständig mit Kunststoff zu füllen.

Der Spritzvorgang erfolgt bevorzugterweise bei einem Druck von 600 bar.

Als Kunststoff kann beispielsweise Polyamid verwendet werden, welches zusätzlich mit einer Faserverstärkung, beispielsweise aus Kurzglasfasern, gefüllt ist.

Bei dem erfindungsgemäßen Spritzgussverfahren wird der Kunststoff mittels eines Druckstutzens zwischen die beiden Bleche in den durch diese gebildeten Raum eingespritzt, sodass die Blechhülle während des Umformungsprozesses einen Druckbehälter darstellt.

Die Bleche, die an ihrem Umfang verschweißt sind, werden nachfolgend mechanisch entlang der Schweißnaht bearbeitet, so dass sich eine optimierte Anströmkante bzw. Abströmkante der fertiggestellten Leitschaufel ergibt. Der radial äußere und radial innere Bereich kann entsprechend gekürzt und geschnitten werden, so dass die Leitschaufel in üblicher Weise in einen Außenring bzw. einen Innenring des Leitschaufelgitters eingesetzt und dort verklebt oder in anderer Weise befestigt werden kann.

Durch die von den Blechen gebildete Oberfläche ergibt sich ein hoher Erosionswiderstand. Weiterhin bilden die beiden Bleche einen Torsionskasten, der eine hohe Strukturfestigkeit, ein hohes Flächenträgheitsmoment sowie einen hohen E-Modul aufweist. Die Schlagbeständigkeit, beispielsweise bei Vogelschlag (impact capatility) ist somit sehr hoch.

Gegenüber Leitschaufeln, die aus einer reinen Kohlenfaserstruktur hergestellt sind, ergibt sich erfindungsgemäß ein um ca. 20 % geringeres Gewicht.

Weiterhin ist das erfindungsgemäße Verfahren kostengünstig durchzuführen, da in einem Spritzgussvorgang die Umformung und Ausformung der Schaufel erfolgt. Es versteht sich, dass ein Umform- und Spritzgusswerkzeug so ausgebildet sein kann, dass gleichzeitig mehrere Schaufeln erzeugt werden.

Die beiden miteinander verschweißten Bleche können unterschiedliche Dimensionierungen aufweisen, so dass die über eine Schweißnaht vorstehende Kante eines größeren Bleches zum Halten und Einspannen in der Spritzgussform mittels einer Niederhalters dient. Hierdurch kann der Innenhochdruckumformvorgang optimiert werden.

Hinsichtlich des Spritzgussvorganges ist es günstig, wenn die Spritzgussform eine geringfügig größere Dimensionierung während des Spritzgussvorgangs aufweist, um die Rückfederung bei der Erstarrung des Kunststoffs zu kompensieren. Hierdurch kann die Leitschaufel passgenau gefertigt werden. Erfindungsgemäß kann der Herstellungsvorgang der Leitschaufel automatisiert werden, so dass der Spritzgussvorgang sowie das Einlegen und Entnehmen vollautomatisch ablaufen können. Auch dies führt zu einer erheblichen Reduzierung der Herstellungskosten.

Ferner von Vorteil ist es, dass jeweils eine Blechinnenseite der Bleche zur Verbesserung der Haftung zwischen Metall und Kunststoff mechanisch aufgeraut wird und/oder mit einem Primer vorbehandelt wird.

In weiterer vorteilhafter Ausgestaltung ist vorgesehen, dass die Bleche in einem nicht planen Werkzeug verschweißt werden, damit unterschiedliche Blechprofillängen von Druck- und Saugseite voreingestellt werden.

Im Folgenden wird die Erfindung anhand eines Ausführungsbeispiels in Verbindung mit der Zeichnungbeschrieben. Dabei zeigt:
- Fig. 1: eine erste vereinfachte schematische Darstellung eines Turbofan-Gasturbinentriebwerks,
- Fig. 2: eine zweite vereinfachte schematische Darstellung eines Turbofan-Gasturbinentriebwerks,
- Fig. 3: eine perspektivische Ansicht eines Leitschaufelelements,
- Fig. 4: eine weitere Ansicht des Leitschaufelelements,
- Fig. 5: eine Schnittansicht durch eine erfindungsgemäße Leitschaufel,
- Fig. 6: eine vergrößerte Darstellung gemäß Fig. 5,
- Fig. 7: eine perspektivische Darstellung eines Spritzgusswerkzeugs,
- Fig. 8: eine vergrößerte Darstellung eines zugehörigen Unterwerkzeugs, und
- Fig. 9: das Spritzgusswerkzeug in Seitenansicht.

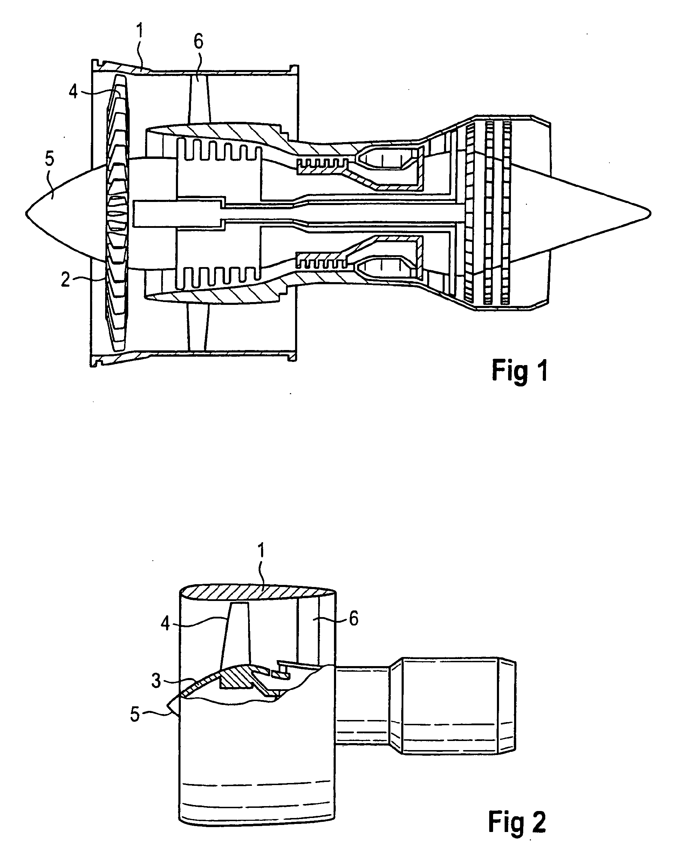

Das in Fig. 1 dargestellte Turbofan-Gasturbinentriebwerk umfasst einen in einem Fangehäuse 1 angeordneten, von einer Niederdruckturbine über eine Niederdruckwelle angetriebenen Fanrotor 2 mit an einer Fanscheibe 3 (Fig. 2) angebrachten Fanschaufeln 4 und einem axial an der Fanscheibe 3 gehaltenen, einstückig ausgebildeten Einlaufkonus 5.

Fig. 2 zeigt ebenfalls ein Turbofan-Gasturbinentriebwerk. Dabei ist die Fanscheibe 3 gut zu sehen.

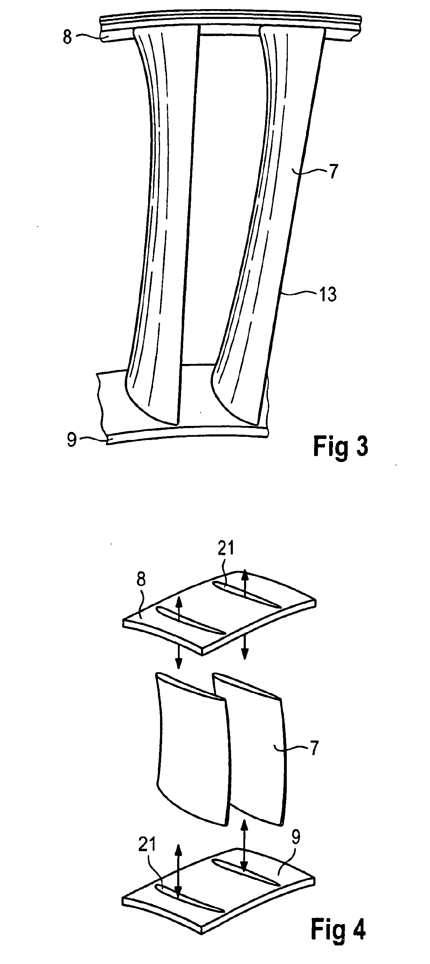

Stromab des Fanrotors ist ein Leitschaufelgitter 6 angeordnet, welches üblicherweise aus einzelnen Segmenten besteht, nämlich einem Außenringsegment 8 und einem Innenringsegment 9 (Fig. 3), zwischen welchen zwei oder drei Leitschaufeln 7 (Statorschaufeln) befestigt sind. Diese Segmente werden einzeln vorgefertigt und bei der Montage eingesetzt.

Die Leitschaufeln 7 sind als dreidimensionale Schaufeln ausgebildet, der radial äußere und der radial innere Schaufelfuß ist in einer in Fig. 3 nicht dargestellten Ausnehmung (21) (Fig. 4) des Außenrings 8 bzw. des Innenrings 9 eingesetzt und verschweißt, verklebt oder auf andere Weise befestigt.

Fig. 4 zeigt die Ausnehmungen (21) für die Leitschaufeln 7 im Innenring 9 und im Außenring 8.

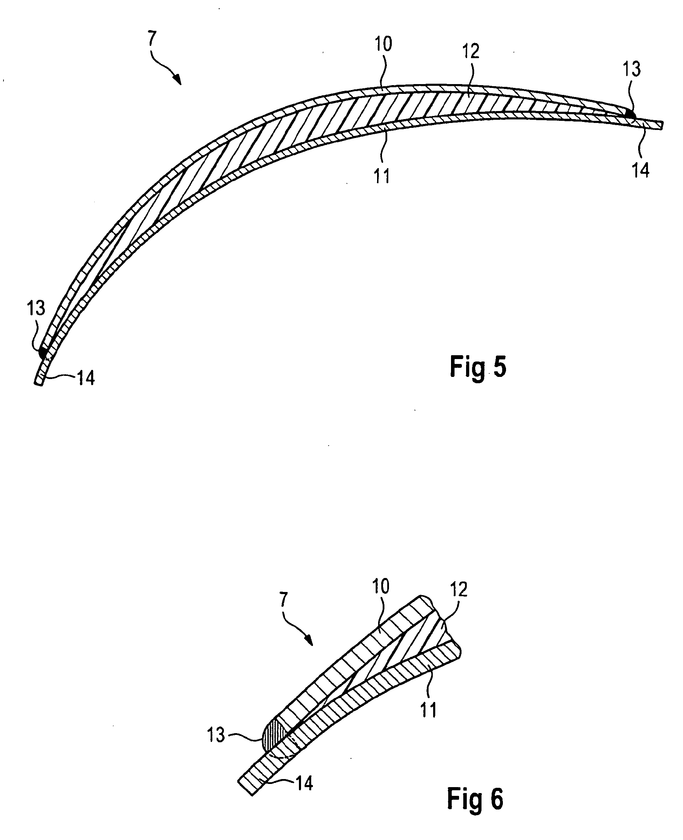

Die Fig. 5 zeigt eine schematische Schnittansicht einer erfindungsgemäßen Leitschaufel 7. Diese ist aus einem ersten Blech 10 und einem zweiten Blech 11 gebildet, wobei die Bleche aus nichtrostendem Stahl oder auf Titanbasis gefertigt sind, welche durch Schweißnähte 13 miteinander verbunden sind. Bei dem Ausführungsbeispiel ist das zweite Blech 11 größer dimensioniert, so dass sich ein überstehender Rand 14 ergibt, der von einem Niederhalter eines Spritzgusswerkzeugs während des Umform- und Spritzgussvorgangs gehalten werden kann.

Die beiden Bleche 10 und 11 sind ursprünglich folienartig und flach und bilden zwischen sich einen Raum, in welchen Kunststoff eingespritzt wird. Dieser Kunststoff bildet nach der Aushärtung einen Kern 12, so wie dies in Fig. 5 gezeigt ist. Somit ergibt sich eine stabile dreidimensionale Struktur.

Die Schweißnaht 13 wird nach der Umformung und dem Spritzgussvorgang mechanisch nachgearbeitet, beispielsweise geschliffen, so wie sich dies durch die gepunktete Linie in Fig. 6 ergibt. Der überstehende Bereich 14 wird dabei somit entfernt, so dass sich eine strömungsoptimierte Anströmkante bzw. Abströmkante ergibt.

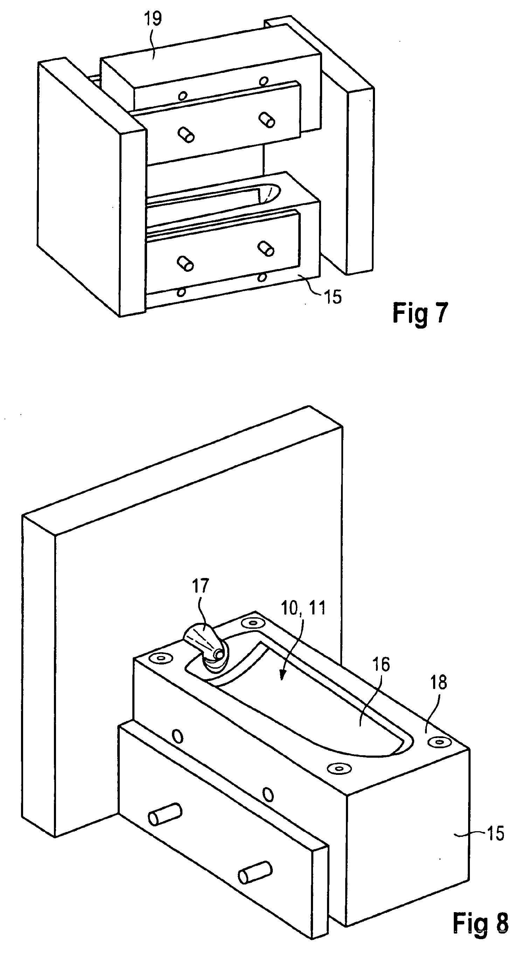

Die Fig. 7, 8 und 9 zeigen ein Beispiel eines zu verwendenden Spritzgusswerkzeugs. In Fig. 8 ist ein Unterwerkzeug 15 mit einem Formhohlraum 16 gezeigt, in welchen (schematisch dargestellt) die miteinander verschweißten Bleche 10, 11 einlegbar sind. Weiterhin ist ein Angussstutzen 17 vorgesehen, mittels dessen Kunststoff in den Raum oder in die Tasche zwischen den Blechen 10, 11 einspritzbar ist. Das Bezugszeichen 18 bezeichnet eine Niederhalterfläche, mittels der der überstehende Rand 14 während des Umformvorgangs gehaltert wird.

In Fig. 7 ist die Zuordnung des Unterwerkzeugs 15 zu einem analog ausgebildeten Oberwerkzeug 19 im geöffneten Zustand dargestellt.

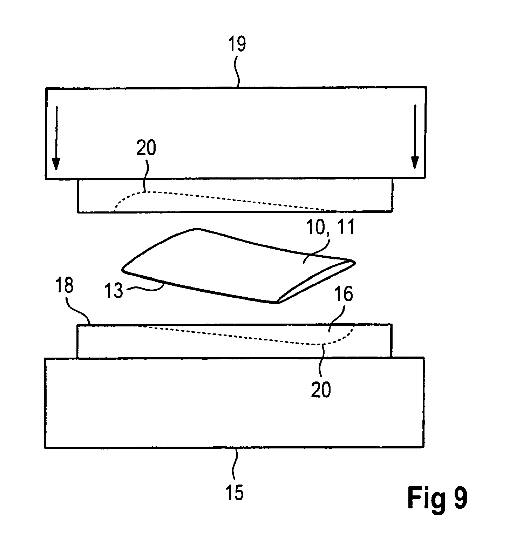

Fig. 9 zeigt das Spritzgusswerkzeug in Seitenansicht. Dabei ist die Kontur 20 des Formhohlraums 16 im Oberwerkzeug 19 und Unterwerkzeug 15 zu sehen.

### Bezugszeichenliste

- 1: Fangehäuse
- 2: Fanrotor
- 3: Fanscheibe
- 4: Fanschaufel
- 5: Einlaufkonus
- 6: Leitschaufelgitter
- 7: Leitschaufel/Statorschaufel
- 8: Außenring
- 9: Innenring
- 10: erstes Blech
- 11: zweites Blech
- 12: Kern
- 13: Schweißnaht
- 14: überstehender Rand
- 15: Unterwerkzeug
- 16: Formhohlraum
- 17: Angussstutzen
- 18: Niederhalterfläche
- 19: Oberwerkzeug
- 20: Kontur
- 21: Ausnehmung

## Patentansprüche

1. Verfahren zur Herstellung einer Leitschaufel (7) eines Leitschaufelgitters (6) einer Fanstruktur einer Fluggasturbine, bei welchem zwei im Wesentlichen flache metallische Bleche (10, 11) an ihrem Umfang verschweißt werden und ein zwischen den Blechen (10, 11) gebildeter Raum mit Kunststoff mittels eines Spritzgussverfahrens mit einem Fülldruck innerhalb eines Spritzgusswerkzeuges umgeformt wird, wobei die Bleche (10, 11) in einem Formhohlraum (16) eines Spritzgusswerkzeugs (15, 19) verformt und mit Kunststoff gefüllt werden.

2. Verfahren nach Anspruch 1, **dadurch gekennzeichnet, dass** die Schweißnähte (13) nach dem Spritzgussvorgang mechanisch bearbeitet werden.

3. Verfahren nach Anspruch 1 oder 2, **dadurch gekennzeichnet, dass** zumindest eine Seite der mit Kunststoff ausgespritzten Statorschaufel (7) durch Abtrennen eines Teilbereichs geformt wird.

4. Verfahren nach einem der Ansprüche 1 bis 3, **dadurch gekennzeichnet, dass** zumindest eine Seite der mit Kunststoff ausgespritzten Statorschaufel (7) durch Abtrennen eines Teilbereichs gekürzt wird.

5. Verfahren nach einem der Ansprüche 1 bis 4, **dadurch gekennzeichnet, dass** der Spritzgussvorgang mit einem Innendruck von bis zu 600 bar durchgeführt wird.

6. Verfahren nach einem der Ansprüche 1 bis 5, **dadurch gekennzeichnet, dass** als Kunststoffmaterial Polyamid verwendet wird.

7. Verfahren nach einem der Ansprüche 1 bis 6, **dadurch gekennzeichnet, dass** das Kunststoffmaterial mit einer Faserverstärkung versehen ist.

8. Verfahren nach einem der Ansprüche 1 bis 6, **dadurch gekennzeichnet, dass** das Kunststoffmaterial ohne Faserverstärkung ausgebildet ist.

9. Verfahren nach einem der Ansprüche 1 bis 8, **dadurch gekennzeichnet, dass** die Bleche (10, 11) in Form einer Folie ausgebildet sind.

10. Verfahren nach einem der Ansprüche 1 bis 9, **dadurch gekennzeichnet, dass** die Bleche (10, 11) aus Titan oder einem Titanwerkstoff gefertigt sind.

11. Verfahren nach einem der Ansprüche 1 bis 9, **dadurch gekennzeichnet, dass** die Bleche (10, 11) aus nichtrostendem Stahl gefertigt sind.

12. Verfahren nach einem der Ansprüche 1 bis 11, **dadurch gekennzeichnet, dass** jeweils eine Blechinnenseite der Bleche (10, 11) zur Verbesserung der Haftung zwischen Metall und Kunststoff mechanisch aufgeraut wird und/oder mit einem Primer vorbehandelt wird.

13. Verfahren nach einem der Ansprüche 1 bis 12, **dadurch gekennzeichnet, dass** die Bleche (10, 11) in einem nicht planen Werkzeug verschweißt werden, damit unterschiedliche Blechprofillängen von Druck- und Saugseite voreingestellt werden.

## Claims

1. Method for the manufacture of a stator vane (7) of a stator vane cascade (6) of a fan structure of an aircraft gas turbine, where two essentially flat metallic sheets (10, 11) are circumferentially welded, with a space between the sheets (10, 11) being formed with plastic material in an injection mould by the filling pressure during the injection moulding process, and with the sheets (10, 11) being formed in a mould cavity (16) of an injection mould (15, 19) and filled with plastic material.

2. Method in accordance with Claim 1, **characterized in that** the welds (13) are mechanically machined after the injection moulding process.

3. Method in accordance with Claim 1 or 2, **characterized in that** at least one side of the stator vane (7) filled with plastic material is formed by cutting off a partial area.

4. Method in accordance with one of the Claims 1 to 3, **characterized in that** at least one side of the stator vane (7) filled with plastic material is shortened by cutting off a partial area.

5. Method in accordance with one of the Claims 1 to 4, **characterized in that** the injection moulding process is performed at an internal pressure of up to 600 bars.

6. Method in accordance with one of the Claims 1 to 5, **characterized in that** polyamide is used as plastic material.

7. Method in accordance with one of the Claims 1 to 6, **characterized in that** the plastic material is provided with a fibrous reinforcement.

8. Method in accordance with one of the Claims 1 to 6, **characterized in that** the plastic material is provided without fibrous reinforcement.

9. Method in accordance with one of the Claims 1 to 8, **characterized in that** the sheets (10, 11) are of the foil type.

10. Method in accordance with one of the Claims 1 to 9, **characterized in that** the sheets (10, 11) are made of titanium or of a titanium material.

11. Method in accordance with one of the Claims 1 to 9, **characterized in that** the sheets (10, 11) are made of stainless steel.

12. Method in accordance with one of the Claims 1 to 11, **characterized in that** an inner side of each sheet (10, 11) is mechanically roughened and/or pretreated with a primer to improve adhesion between the metal and the plastic material.

13. Method in accordance with one of the Claims 1 to 12, **characterized in that** the sheets (10, 11) are welded in a non-plane tool to preset different sheet profile lengths of the pressure and suction side.

## Revendications

1. Procédé pour fabriquer une aube de stator (7) d'une grille d'aubes de stator (6) d'une structure de soufflante d'une turbine à gaz aéronautique, dans lequel deux plaques métalliques (10, 11) planes pour l'essentiel sont soudées sur leurs pourtours, et un espace entre les plaques (10, 11) est formé avec de la matière synthétique au moyen d'un procédé de moulage par injection avec une pression de remplissage à l'intérieur d'un moule à injection, les plaques (10, 11) étant façonnées et remplies de matière synthétique dans une cavité (16) d'un moule à injection (15, 19).

2. Procédé selon la revendication n° 1, **caractérisé en ce que** les cordons de soudure (13) sont usinés mécaniquement après le moulage par injection.

3. Procédé selon la revendication n° 1 ou n° 2, **caractérisé en ce qu'**au moins un côté de l'aube de stator (7) remplie de matière synthétique est formé par détachement d'une zone partielle.

4. Procédé selon une des revendications n° 1 à n° 3, **caractérisé en ce qu'**au moins un côté de l'aube de stator (7) remplie de matière synthétique est raccourci par détachement d'une zone partielle.

5. Procédé selon une des revendications n° 1 à n° 4, **caractérisé en ce que** le moulage par injection est effectué avec une pression interne pouvant atteindre 600 bar.

6. Procédé selon une des revendications n° 1 à n° 5, **caractérisé en ce que** du polyamide est utilisé comme matériau synthétique.

7. Procédé selon une des revendications n° 1 à n° 6, **caractérisé en ce que** le matériau synthétique est renforcé par des fibres.

8. Procédé selon une des revendications n° 1 à n° 6, **caractérisé en ce que** le matériau synthétique n'est pas renforcé par des fibres.

9. Procédé selon une des revendications n° 1 à n° 8, **caractérisé en ce que** les plaques (10, 11) sont conçues sous la forme d'une feuille.

10. Procédé selon une des revendications n° 1 à n° 9, **caractérisé en ce que** les plaques (10, 11) sont fabriquées en titane ou en un matériau de titane.

11. Procédé selon une des revendications n° 1 à n° 9, **caractérisé en ce que** les plaques (10, 11) sont fabriquées en acier inoxydable.

12. Procédé selon une des revendications n° 1 à n° 11, **caractérisé en ce que** pour améliorer l'adhérence entre le métal et la matière synthétique, une face intérieure de chaque plaque (10, 11) est mécaniquement rendue rugueuse et/ou prétraitée avec une couche de fond.

13. Procédé selon une des revendications n° 1 à n° 12, **caractérisé en ce que** les plaques (10, 11) sont soudées dans un outil non plan afin de préajuster des longueurs de profil de plaque différentes des côtés refoulement et aspiration.
